# EUROPEAN PATENT SPECIFICATION

(11) **EP 2 284 055 B1**
(45) Date of publication and mention of the grant of the patent: **11.03.2015**
(21) Application number: 10189900.3
(22) Date of filing: 25.03.2008
(51) Int. Cl.: B60T 13/68, B60T 8/32, B60T 8/34, B60T 8/88, B60T 17/22

(54) **VEHICLE BRAKING SYSTEM**
FAHRZEUGBREMSSYSTEM
SYSTEME DE FREINAGE POUR VEHICULE

(30) Priority: 26.03.2007 GB 0705789; 29.10.2007 GB 0721100
(43) Date of publication of application: 16.02.2011
(62) Divisional of application: 08718858.7
(73) Proprietor: Haldex Brake Products Limited, Lindley, Warwickshire CV13 6DE (GB)
(72) Inventor: Potter, Laurence John, Birmingham, West Midlands B13 9RL (GB); Shaw, Edward Gilbert, Inkberrow, Worcestershire WR7 4HD (GB); Prescott, Robert David, Solihull, West Midlands B91 1DG (GB)
(74) Representative: Lawson, Alison Christina

(56) References cited:
- WO-A-2004/098967
- WO-A-2006/005898

## Description

### Description of Invention

The present application relates to a braking system according to the preamble of claim 1, particularly, but not exclusively, to a braking system for heavy goods vehicles, including trucks and articulated vehicles comprising a tractor and a trailer.

A braking system of this kind is known from WO2004/098967.

Traditionally, braking systems for heavy goods vehicles were completely pneumatic systems in which a single or dual pneumatic braking signal is generated at a brake pedal and transmitted either directly to brake actuators or to a plurality of chassis mounted modulators each of which generates a further pneumatic signal for operation of one or more pneumatically operated brake actuators. At present, however, there is a trend towards electrically controlled and / or powered braking systems, in which the pneumatic signals are replaced with electrical signals. The ultimate objective is perceived to be a completely electrically powered braking system in which a user operated brake pedal generates an electrical braking demand signal which is transmitted to an electrically operated brake actuator. Such systems have yet to be widely commercialized, however, as there are significant technical difficulties in implementing such systems.

Hybrid electrical and pneumatic braking systems are known in which, for service brake operation, a user operated brake pedal generates an electrical braking demand signal which is transmitted to one or more electrically operated modulators to which compressed air is supplied. In response to the electrical braking demand signal, each modulator generates an appropriate pneumatic signal which is transmitted, via a first pneumatic line, to the brake actuator for each wheel. A second pneumatic line is provided to one or more of the brake actuators by means of which compressed air is supplied to a spring (parking) brake in order to maintain the spring brake in the release position.

Moreover, in such known systems, in order to provide a back-up in the event of an electrical failure, at least one further pneumatic control line is provided between the brake pedal and the modulator, to facilitate the transmission of a pneumatic braking demand signal generated by movement of the brake pedal to the modulator. When electrical power is present, means are provided to use the electrical signal in favour of the pneumatic braking demand signal, but in the event of electrical power failure, the pneumatic braking demand signal is transmitted to the modulator where it is used to generate an appropriate pneumatic brake actuation signal.

According to the invention we provide a braking system comprising a first braking demand signal generator, a modulator which is connected to a source of pressurised fluid via a first fluid flow line, the modulator being connected to and having an input for receipt of a braking demand signal from the braking demand signal generator and further connected to a first braking chamber in a fluid operated brake actuator via a second fluid flow line, the modulator being adapted, on receipt of a braking demand signal from the first braking demand signal generator, to allow pressurised fluid to pass from the source of pressurised fluid to the actuator, the actuator being configured such that passage of pressurised fluid from the modulator into the first chamber causes the actuator to move to a brake apply position, the system further comprising a second braking demand signal generator which is connected to an electrically operated controller, the controller having an input for receipt of a braking demand signal from the second braking demand signal generator, and controlling flow of fluid from the source of pressurised fluid to a second chamber of the brake actuator, the brake actuator being further provided with a mechanical biasing element which biases the actuator into the brake apply position, and being configured such the passage of pressurised fluid into the second chamber causes the actuator to be moved against the force of the mechanical biasing element out of the brake apply position, the controller being adapted to release pressurised fluid from the second chamber of the actuator on receipt of a braking demand signal, but not in the event of failure of the electrical power supply to the controller.

The controller may include first and second electrically operable valve assemblies, the first valve assembly having an inlet which is connected to the source of pressurised fluid, and an outlet which is connected to an inlet of the second valve assembly, and the second valve assembly may include an outlet which is connected to the second chamber. In this case preferably the first valve assembly is configured so as to adopt a configuration in which flow of fluid between its inlet and the outlet is substantially prevented, when there is no supply of electricity to the first valve assembly, and the second valve assembly is configured so as to adopt a configuration in which flow of fluid between its inlet and outlet is also substantially prevented when there is no supply of electricity to the second valve assembly.

Preferably the system further comprises a third braking demand signal generator which is connected to a second brake actuator via a second electrically operated controller, the second controller having an input for receipt of a braking demand signal from the third braking demand signal generator, the second brake actuator including a second chamber and a mechanical biasing element which biases the actuator into a brake apply position, and being configured such the passage of pressurised fluid into the second chamber causes the second actuator to be moved against the force of the mechanical biasing element out of the brake apply position, the second controller being adapted to release pressurised fluid from the second chamber of the actuator on receipt of a braking demand signal from the third braking demand signal generator, wherein the first controller is connected to the second controller such that fluid communication between the controllers is permitted, one controller supplying fluid to the other controller required to maintain the other controller in a configuration in which release of fluid from the second chamber of the respective actuator is not permitted, when electrical power to the other controller fails.

In this case each controller may include first, second and third valve assemblies, the first valve assembly having an inlet which is connected to a source of pressurised fluid, and an outlet which is connected to an inlet of the second valve assembly and to the second chamber, the second valve assembly having an outlet which is connected to an inlet of the third valve assembly. In this case, preferably the third valve assembly has an outlet which is connected to the second valve assembly of the other controller.

The system may be provided with two separate sources of pressurised fluid, the first supplying pressurised fluid to the first controller, and the second supplying pressurised fluid to the second controller.

Embodiments of the invention will now be described, by way of example only, with reference to the following figures:
FIGURE 1 is a schematic of a vehicle braking system according to the invention,
FIGURE 2 is a schematic of a first possible pneumatic arrangement of the central control unit and an actuator mounted modulator of the vehicle braking system illustrated in Figure 1,
FIGURE 3 is a more detailed schematic illustration of an example of two of the actuator mounted modulators according to the pneumatic arrangement illustrated in Figure 2, and associated fluid reservoir, control unit and brake actuators,
FIGURE 4 is a more detailed schematic illustration of an example of the central control unit according to the pneumatic arrangement illustrated in Figure 2, with associated modulators and brake actuators,
FIGURE 5 is a schematic illustration of the modulator illustrated in Figure 2 with an additional non-return valve,
FIGURE 6 is a schematic illustration of an alternative embodiment of central control unit in accordance with the invention, and
FIGURE 7 is a more detailed schematic illustration of two central control units according to a further alternative embodiment of central control unit in accordance with the invention.

Referring now to the figures, there is shown a braking system 10 for a vehicle with four wheels 12a, 12b, 12c, and 12d. In this embodiment of the invention, the vehicle is a commercial heavy goods vehicle, which may be adapted to pull a trailer. First and second wheels 12a, 12b are mounted on a tractor at the front of the vehicle, on opposite sides of the vehicle, and third and fourth wheels 12c, 12d are mounted towards the rear of the vehicle. A conventional brake 13a, 13b, 13c, 13d, which may be a disc or a drum brake, is mounted on each wheel 12a, 12b, 12c, 12d.

The braking system includes a braking demand signal generator - in this example a brake pedal assembly 14, which is mounted in a cab of the vehicle where it may be operated by a driver of the vehicle when application of the vehicle's brakes 13a, 13b, 13c, 13d is required to decelerate the vehicle. The brake pedal assembly 14 in this example includes a foot operable brake pedal 14a and first and second electrical braking demand signal generators 14b, 14b' each of which is connected to the brake pedal 14a such that movement of the brake pedal 14a causes the electrical braking demand signal generator 14b, 14b' to generate an electrical signal representative of the magnitude of the braking force required to be applied to the vehicle brakes 13a, 13b, 13c, 13d to achieve the deceleration desired by the driver.

The vehicle brakes 13a, 13b, 13c, 13d are each operated by a conventional brake actuator 25a, 25b, 25c, 25d which includes a service brake chamber and a spring brake chamber. It should be appreciated that not all the wheels 12a, 12b, 12c, 12d need to be provided with a brake actuator with a spring brake chamber. Spring brakes may, for example, only be provided on the rear wheels 12c, 12d of the vehicle.

The brakes 13a, 13b, 13c, 13d are applied for service braking by the pressure of compressed air supplied to the service brake chamber, and are actuated for parking by the force of a spring which is applied by exhausting of pressure from the spring brake chamber. Each wheel 12a, 12b, 12c, 12d is also provided with a modulator 16a, 16b, 16c, 16d which is mounted directly adjacent its respective brake actuator 25a, 25b, 25c, 25d.

Each electrical braking demand signal generator 14b, 14b' has a single electrical output which is connected to two of the four modulators 16a, 16b, 16c, 16d by means of a conventional electrical connection. Advantageously, each electrical braking demand signal generator 14b, 14b' is connected to a modulator 16a, 16b on one of the front wheels 12a, 12b and to a modulator 16c, 16d on one of the rear wheels 12c, 12d. Even more advantageously, each electrical braking demand signal generator 14b, 14b' is connected to a modulator 16a, 16b on a wheel 12a, 12b at the front and on a first side of the vehicle and to a modulator 16c, 16d on a wheel 12c, 12d at the rear and on a second side of the vehicle. In this case, the first electrical signal generator 14b is connected to the modulators 16a, 16d on the first and fourth wheels 12a, 12d, whilst the second electrical signal generator 14b' is connected to the modulators 16b, 16c on the second and third wheels 12b, 12c.

The connection between the first electrical braking demand signal generator 14b and the first and fourth modulators 16a, 16d comprises a first electrical circuit to which the electrical power required for operation of the electrical braking demand signal generator 14b and modulators 16a, 16d is supplied by means of a first battery 18. Similarly, the connection between the second electrical braking demand signal generator 14b' and the second and third modulators 16b, 16c comprises a second electrical circuit to which the electrical power required for operation of the electrical braking demand signal generator 14b' and modulators 16b, 16c is supplied by means of a second battery 18'. The first and second battery 18, 18' are typically charged from a single energy source such as a vehicle alternator, but are electrically isolated from one another, and from the main vehicle battery, such that if one battery runs flat, it cannot draw power from the other. As such, the first electrical circuit is entirely separate from the second electrical circuit, so that a failure in one circuit will not effect operation of the other circuit.

The braking system is further provided with first and second reservoirs 20, 20' of pressurized fluid, which, in this example is compressed air, the first reservoir 20 being connected by means of conventional pneumatic lines to an inlet port of each of the first and fourth modulators 16a, 16d via a first electronic control unit 22, and the second reservoir 20' being connected by means a conventional pneumatic lines to the an inlet port of each of the second and third modulators 16b, 16c via a second control unit 22'. Both reservoirs are mounted on the vehicle chassis.

In this example, the first and second central control units 22, 22' are electronic control units and are mounted on the vehicle chassis, the first central ECU 22 being electrically connected to the first electrical braking demand signal generator 14b, and connected pneumatically between the first compressed air reservoir 20 and the first and fourth modulators 16a, 16d, and the second central ECU 22' being electrically connected to the second electrical braking demand signal generator 14b', and connected pneumatically between the second compressed air reservoir 20' and the second and third modulators 16b, 16c.

In an alternative embodiment of the invention, the system may be provided with separate electronic control unit for each wheel, each electronic control unit being mounted adjacent the brake actuator and modulator in a fluid flow line extending from the line between the reservoir and the modulator and the spring brake chamber.

Whilst the electrical braking demand signals may be transmitted directly from each electrical braking demand signal generator 14b, 14b' to the respective modulators 16a, 16b, 16c, 16d, in this embodiment of the invention, the system is configured such that the electrical braking demand signals are transmitted to the modulators 16a, 16b, 16c, 16d via the central electronic control units 22, 22'. In the case where the electrical braking demand signals are transmitted directly to the respective modulators 16a, 16b, 16c, 16d, the braking demand signal generators 14b, 14b' may each include a processor which processes the signal generated by a sensor incorporated in the foot pedal 14a to a signal which is recognisable to the modulator 16a, 16b, 16c, 16d and which the modulator 16a, 16b, 16c, 16d can process. Otherwise, this processing step may be carried out by a microprocessor provided in each of the control units 22, 22'.

In addition to the brake pedal assembly 14, in the driver's cab of the vehicle there is provided a parking brake demand input device 24 which, in this example comprises a manually operable on/off switch. The mechanical parts of the switch 24 actuate separate, first and second electrical switches 24a, 24a', the first electrical parking brake switch being electrically connected to the first central electronic control unit 22 and the second electrical parking brake switch being electrically connected to the second central control unit 22'.

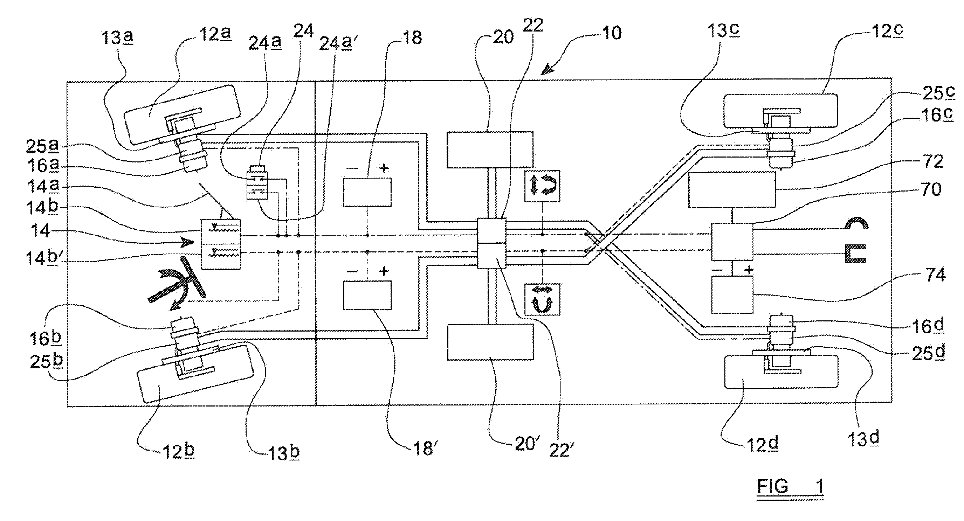

Each modulator 16a, 16b, 16c, 16d is provided with an outlet which communicates with the service brake chamber of its respective actuator 25a, 25b, 25c, 25d, so that supply of compressed air to each service brake chamber is regulated by a modulator 16a, 16b, 16c, 16d. In accordance with the first aspect of the invention, compressed air is supplied to each spring brake chamber via the same pneumatic line or pipe by means of which compressed air is supplied to the modulator 16a, 16b, 16c, 16d, the modulator inlet port communicating with this pneumatic line at a point adjacent the actuator 25a, 25b, 25c, 25d, but between the spring brake chamber and the respective control unit 22, 22'. As such, it will be appreciated that only one pneumatic line is required to be provided for each wheel from the central compressed air reservoirs 20, 20' as illustrated in Figure 1, the split in the pneumatic line required to provide a compressed air supply to both the spring brake and the service brake being located directly adjacent each brake actuator 25a, 25b, 25c, 25d.

In other embodiments of braking system a separate pneumatic line may be provided to convey pressurised fluid to each of the spring brake chamber from the pressurised fluid reservoirs.

The actuators 25a, 25b, 25c, 25d are each mounted directly adjacent the brake they operate, and near a wheel 12a, 12b, 12c, 12d of the vehicle, along with the modulators 16a, 16b, 16c, 16d. As such, the actuator 25a, 25b, 25c, 25d and modulator 16a, 16b, 16c, 16d at each wheel 12a, 12b, 12c, 12d may be provided in a single housing.

In this case, the vehicle is adapted to tow a trailer, the trailer also having a braking system, and therefore the braking system also comprises a trailer control unit 70 which is connected to a third reservoir of pressurised fluid 72 and which is powered using a third battery 74 which may be the normal vehicle battery. The trailer control unit 70 receives electrical braking demand input signals from both the central control units 22, 22' and converts these to a pneumatic braking demand signal which is then carried down a line to the trailer in order to effect operation of the trailer braking system. It will be appreciated, however, that the vehicle need not be adapted to tow such a trailer

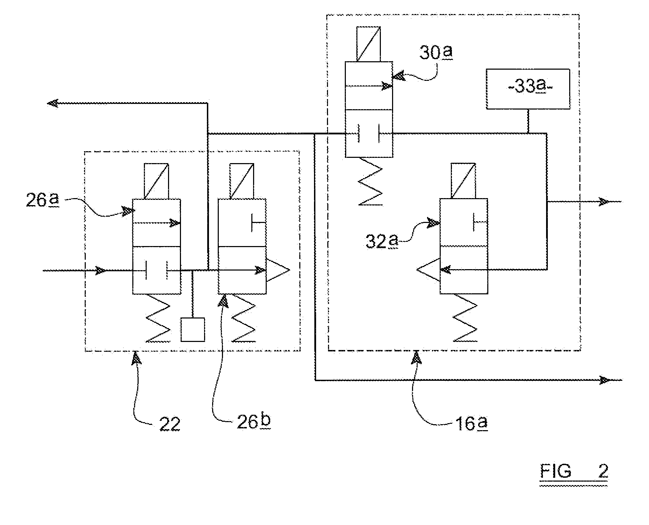

Referring now to figure 2, a schematic showing the arrangement of pneumatic valves in an embodiment of the first central control unit 22 not in accordance with the invention and the first modulator 16a is shown. It should be appreciated, however, that the second central control unit 22' and other modulators 16b, 16c, 16d are configured in exactly the same way, and that each central control unit 22, 22' and modulator 16a, 16b, 16c, 16d also includes electronic processing means and a programmable memory.

In this embodiment, the central control unit 22 includes first and second solenoid operated valves assemblies 26a, 26b, which will hereinafter be referred to as the park build valve 26a, and the park dump valve 26b respectively. The park build valve 26a has a first port which communicates with the first reservoir, a second port which communicates with the park dump valve 26b, and is mechanically biased to a closed position in which the first port and second port are closed, and movable, by the application of an electrical current to its solenoid, to an open position in which the first port is connected to the second port. The park dump valve 26b has a first port which communicates with the second port of the park build valve 26a and a second port which communicates with the atmosphere. A pressure transducer 28 and a pneumatic line to the modulators 16a, 16d and the spring brake chambers of the first and fourth brake actuators 25a, 25d extends from the connection between the park build 26a and park hold 26b valves. The park dump valve 26b is mechanically biased to an open position in which the first port is connected to the atmosphere, and is movable to a closed position by the supply of an electrical current to its solenoid, in which the first port is closed.

The modulator 16a also is configured in the same way and includes first and second solenoid operated valve assemblies 30a, 32a, herein after referred to as the wheel build valve 30a and the wheel dump valve 30b respectively. The wheel build valve 30a includes a first port which is forms the modulator inlet, and hence which communicates with the pneumatic line from the central control unit 22, and a second port which communicates with the service brake chamber of the brake actuator 16a and a first port of the wheel dump valve 32a. A pressure transducer 34 is provided between the second port of the wheel build valve 30a and the service brake chamber.

The wheel build valve 30a is mechanically biased to a closed position in which the first and second ports are substantially closed, and movable, by the supply of an electrical current to its solenoid, to an open position in which the first and second ports are connected. The wheel dump valve 32a, in addition to its first port, includes a second port which communicates with the atmosphere. The wheel dump valve 32a is mechanically biased to an open position in which the first port communicates with the second port, and is movable, by the supply of an electrical current to its solenoid, to a closed position in which the first port is closed.

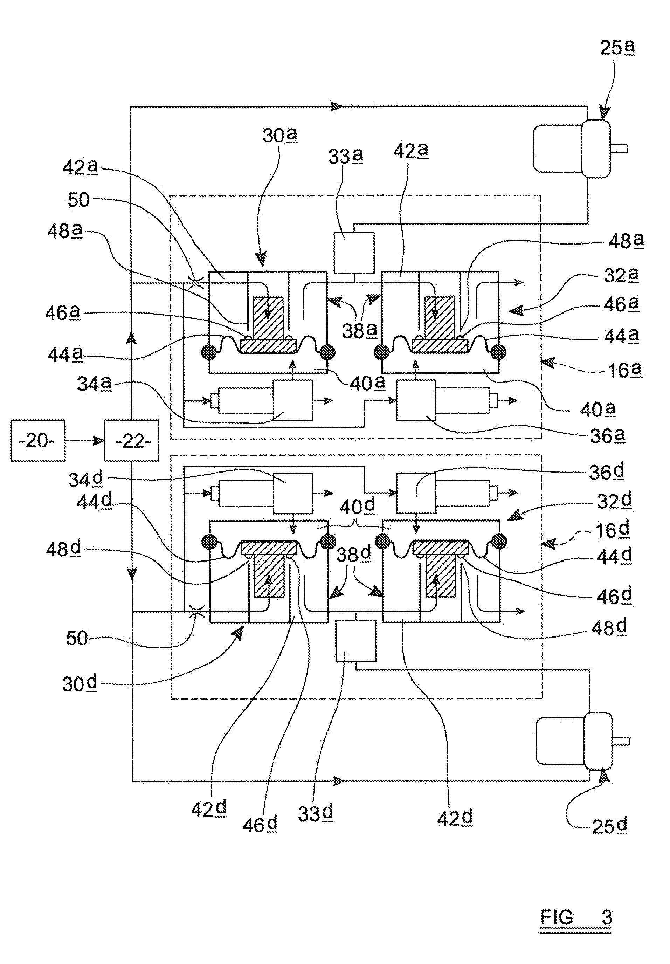

Further details of the valve assemblies 30a, 30d, 32a, 32d in the first and fourth modulators 16a, 16d are illustrated in Figure 3, although it should be appreciated that the invention is not limited to this particular configuration of valve assembly. In this example, however, it should be noted that the second and third modulators 16b, 16c are configured in the same way. Each valve assembly 30a, 30d, 32a, 32d includes a solenoid 34a, 34d, 36a, 36d, and body 38a, 38d which is divided into a control chamber 40a, 40d and a flow chamber 42a, 42d by means of a diaphragm 44a, 44d on which is mounted a valve member 46a, 46d. The first and second ports of the valve assembly 30a, 30d, 32a, 32d communicate with the flow chamber 42a, 42d. The diaphragm 44a, 44d is movable so that the valve member 46a, 46d may engage with a valve seat 48a, 48d and prevents flow of fluid from the first port to the second port of the valve assembly 30a, 30d, 32a, 32d.

Each solenoid 34a, 34d, 36a, 36d has an inlet which communicates with the first port of the valve assembly 30a, 30d, 32a, 32d (and hence the pneumatic line from the first reservoir 20 and central control unit 22), an outlet which communicates with control chamber 40a, 40d and an exhaust port which communicates with the atmosphere.

The solenoid 34a, 34d of the wheel build valve 30a, 30d is mechanically biased to a position in which flow of fluid from the valve assembly inlet to the control chamber 40a, 40d is permitted. A restriction 50 is provided in the pneumatic line at the valve assembly inlet such that when pressurised fluid is supplied to the modulator 16a, 16d, the fluid pressure in the flow chamber 42a, 42d is no greater than the pressure in the control chamber 40a, 40d. As a result, the diaphragm 44a, 44d moves the valve member 46a, 46d into engagement with the valve seat 48a, 48d, and flow between the first and second port is substantially prevented. By the supply of an electrical current to the solenoid 34a, 34d, the solenoid 34a, 34d moves such that the outlet port is connected to the exhaust port, and pressurised fluid in the control chamber 40a, 40d vents to the atmosphere. The pressure of fluid in the flow chamber 42a, 42d moves the valve member 46a, 46d out of engagement with the valve seat 48a, 48d and flow between the first and second ports is permitted.

The solenoid 36a, 36d in the wheel dump valve 32a, 32d is configured in the opposite way, i.e. it is mechanically biased to a position in which flow of fluid from the control chamber 40a, 40d to the atmosphere is permitted, and the inlet port is closed, and movable by the application of an electric current to a position in which flow of fluid from the valve assembly inlet to the control chamber 40a, 40d is permitted.

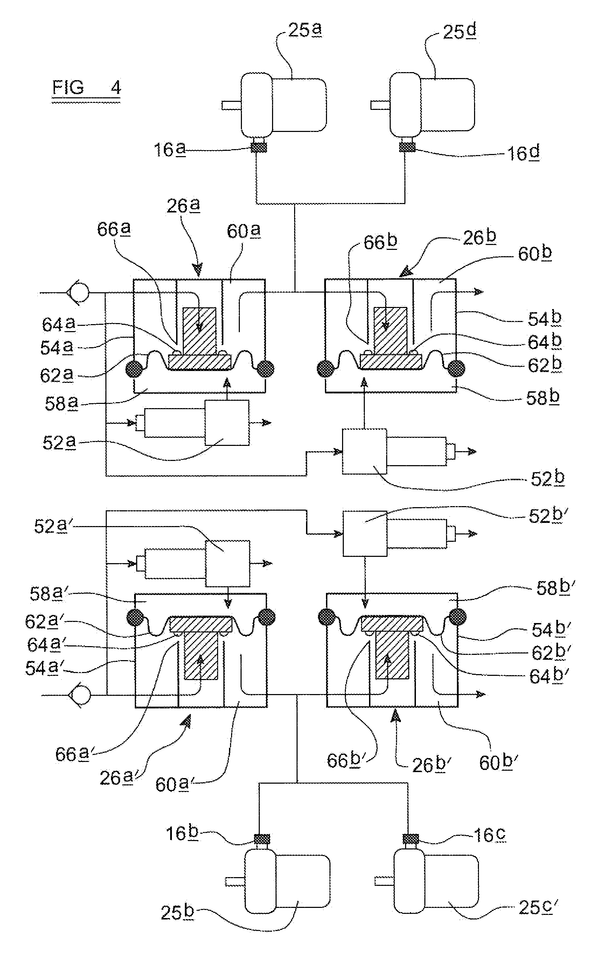

The park build and park dump valves 26a, 26b are configured in a similar way, and the arrangement of these valves is illustrated in Figure 4. The park build and park dump valves 26a, 26a', 26b, 26b' each include a solenoid 52a, 52a', 52b, 52b', and body 54a, 54a', 54b, 54b' which is divided into a control chamber 58a, 58a', 58b, 58b' and a flow chamber 60a, 60a', 60b, 60b' by means of a diaphragm 62a, 62a', 62b, 62b' on which is mounted a valve member 64a, 64a', 64b, 64b'. The first and second ports of the valves 26a, 26a', 26b, 26b' communicate with the flow chamber 60a, 60a', 60b, 60b'. The diaphragm 62a, 62a', 62b, 62b' is movable so that the valve member 64a, 64a', 64b, 64b' may engage with a valve seat 66a, 66a', 66b, 66b' and prevents flow of fluid from the first port to the second port of the valve.

Each solenoid 52a, 52a', 52b, 52b' has an inlet which communicates with the first port of the valve 26a, 26a', 26b, 26b' (and hence the pneumatic line from the first reservoir 20), an outlet which communicates with control chamber 58a, 58a', 58b, 58b' and an exhaust port which communicates with the atmosphere.

The solenoid 52a, 52a' of each park build valves 26a, 26a' is mechanically biased to a position in which flow of fluid from the valve assembly inlet to the control chamber 58a, 58a' is permitted. A restriction is provided in the pneumatic line at the valve assembly inlet such that when pressurised fluid is supplied to the central control unit 22, 22', the fluid pressure in the flow chamber 60a, 60a' is less than the pressure in the control chamber 58a, 58a'. As a result, the diaphragm 62a, 62a' moves the valve member 64a, 64a' into engagement with the valve seat 66a, 66a', and flow between the first and second port is substantially prevented. By the supply of an electrical current to the solenoid 52a, 52a', the solenoid 52a, 52a' moves such that the outlet port is connected to the exhaust port, and pressurised fluid in the control chamber 58a, 58a' vents to the atmosphere. The pressure of fluid in the flow chamber 60a, 60a' moves the valve member 64a, 64a' out of engagement with the valve seat 66a, 66a' and flow between the first and second ports is permitted. The solenoid 52b, 52b' in each of the park dump valves 26b, 26b' is configured in the opposite way, i.e. it is mechanically biased to a position in which flow of fluid from the control chamber 58b, 58b' to the atmosphere is permitted, and the inlet port is closed, and movable by the application of an electric current to a position in which flow of fluid from the valve assembly inlet to the control chamber 60b, 60b' is permitted. Thus, when no electric current is present, flow of flow from the first port of the park dump valve 26b, 26b' through the flow chamber 60b, 60b' to the atmosphere is permitted.

The braking assembly may thus be operated as follows.

When the vehicle is not in operation, and is parked, no electrical power is supplied to any of the solenoid operated valves in any of the central control units 22, 22' or modulators 16a, 16b, 16c, 16d. On system start up, this is maintained until the driver wishes to set off, and therefore actuates the park brake switch 24 to release the parking brake. This causes an electrical parking brake release signal to be transmitted to both of the central control units 22, 22' which, having processed the signal, each applies an electrical current to its respective park build/dump and park hold valves 26a, 26a', 26b, 26b' which causes the spring brake chamber to be connected to the respective pressurised fluid reservoir 20, 20' and pressure in the spring chamber to increase until the spring force is overcome, and the parking brake released.

If service braking is then required, and the driver operates the brake pedal 14a in order to decelerate the vehicle, each braking demand signal generator 14b, 14b' generates an electrical signal which depends on the magnitude of the braking force required. This signal is transmitted simultaneously to the modulators 16a, 16b, 16c, 16d via the central control units 22, 22'. On receipt of this signal, the central control units 22, 22' continue to apply an electrical current to the park build and park dump valves 26a, 26a', 26b, 26b', so that fluid can flow from the reservoir 20, 20' the modulators 16a, 16b 16c, 16d. The modulators 16a, 16b, 16c, 16d also process the signal and apply an electrical current to the wheel build valves 30a, 30b, 30c, 30d so as to permit pressurised fluid to pass from the reservoirs 20, 20' to the service brake chamber of each actuator 25a, 25b, 25c, 25d, and to the wheel dump valve 32a, 32b, 32c, 32d to prevent the service brake chamber from venting to the atmosphere.

By virtue of using the same pneumatic line to supply fluid to the spring chamber as to the modulators 16a, 16b, 16c, 16d, operation of the modulator valves as described above, there is a reservoir of pressurised fluid already present at the wheel 12a, 12b, 12c, 12d in the form of the spring brake chamber. Immediately the service brakes are applied, some pressurised fluid flows from the spring brake chamber to the service brake chamber. Initial flow of fluid from the spring brake chamber to the service brake chamber will not be sufficient to allow the spring brake to be actuated but will be enough to commence operation of the service brake quicker than would otherwise be achieved without the presence of this local pressurised fluid reservoir. Thus, the delay between the driver actuating the brake pedal and the application of the brakes 13a, 13b, 13c, 13d may be reduced.

The pressure of the fluid in the service brake chambers is monitored using the pressure transducer 33, and the signal to the wheel build valves 30a, 30b, 30c, 30d controlled as in a conventional EBS to produce the desired braking force. In order to do this, each modulator is programmed to hold the pressure in the service brake by maintaining electrical power supply to the second modulator valve assembly 32, and removing electrical power supply to the wheel build valves 30a, 30b, 30c, 30d, so that the wheel build valves 30a, 30b, 30c, 30d move to the closed (hold) position.

In order to release the service brake, the electrical current to the wheel build and wheel dump valves 30a,30b, 30c, 30d, 32a, 32b, 32c, 32d in each modulator 16a, 16b, 16c, 16d is removed, and the service brake chamber vents to the atmosphere at the wheel 13a, 13b, 13c, 13d.

Each modulator 16a, 16b, 16c, 16d may be adapted to receive further electrical input signals, for example from wheel speed sensors, thus enabling it to provide an ABS function, that is to apply, hold, and release the service brake as in conventional anti-lock braking systems.

In order to apply the parking brake, the driver actuates the park brake switch 24 which causes the electrical park brake switches 24a, 24a' to close and transmit an electrical park brake demand signal to the central control units 22, 22'. On receipt of this signal, the central control unit 22, 22' removes the electrical current supply to the park build and park hold valves 26a, 26a', 26b, 26b'. Fluid in the spring brake chamber is thus permitted to vent to the atmosphere, so that the spring force can act to apply the parking brake. The system may then be shutdown by switching off the power supplied to all the solenoid operated valves 26a, 26a', 26b, 26b', 30a,30b, 30c, 30d, 32a, 32b, 32c, 32d.

It should be appreciated that the park brake switch 24 could be replaced by a lever if it is required to enable a user to apply the park brake with a variable force. In this case, rather than act as a simply on/off switch, the park brake signal demand generators 24a, 24a', rather than being on/off switches, would be configured in the same way as the service brake demand signal generators 14b, 14b' to generate a signal which depends on the magnitude of the braking force indicated by a user to be required. In order to maintain the parking braking force at an appropriate level, the central control units 22, 22' would thus be programmed to monitor the pressure in the spring brake chamber using the pressure transducer 28, 28' and remove the electrical current to the park dump valve 26b, 26b' to hold the pressure in the spring chamber at a desired value.

By virtue of the use of a single pneumatic line supplying both the service brake and the parking brake, the system is configured to be automatically non-compounding, i.e. not permit both a service brake force and a park brake force to be applied to the actuators 25a, 25b, 25c, 25d simultaneously.

If the driver operates the brake pedal to apply the service brake when the parking brake is applied, electrical power will be supplied to the wheel build and wheel dump valves 30a, 30b, 30c, 30d, 32a, 32b, 32c, 32d as normal during service braking. This will not, however, result in the application of an additional braking force to the actuators, as, when the parking brake is applied the park build valve 26a, 26a' in each central control unit 22, 22' is in the closed position, whilst the park dump valve 26b, 26b' is venting to atmosphere, and so the service chamber will be connected to the atmosphere at the central control unit 22, 22', rather than to the reservoir 20, 20'.

Similarly, if the driver operates the parking brake switch 24 when the service brake is applied, under standard conditions, on activation of the parking brake, power is removed from the park build and park dump valves 26a, 26a', 26b, 26b'. During normal application of the service brake, the wheel build and wheel dump valves 30a, 30b, 30c, 30d, 32a, 32b, 32c, 32d are configured so as to connect each service brake chamber to the fluid reservoir 20, 20' via the central control unit 22, 22', and therefore the service brake cannot be actuated, thus also avoiding compounding of the brakes.

It may not, however, be advantageous for this to occur when, for example, the vehicle is parked on a hill, and the driver wishes to apply the parking brake to park the vehicle. The central control units 22, 22' may, therefore be programmed remove power supply to the wheel build valves 30a, 30b, 30c, 30d so as to hold the pressure in the service brake chambers, remove current from the park build and park hold valves 26a, 26a', 26b, 26b' in the central control units 22, 22' to release air pressure in the spring brake chamber, monitor the pressure in the pneumatic line to the modulator 16a, 16b, 16c, 16d using the pressure transducer 28, 28', and apply an electrical current to the wheel build valve 30a, 30b, 30c, 30d intermittently to decrease the service braking pressure gradually as the parking brake becomes active.

In the event of electrical power failure in one or both of the circuits in this embodiment of the invention, it will be appreciated that the solenoid valves will revert to the positions illustrated in Figure 2 in which the service brake chamber and spring brake chamber both vent to the atmosphere. This will result in sudden and uncontrolled application of the spring brake, which is not desirable and is, in fact, expressly forbidden to occur by certain braking system regulations.

It will also be appreciated that, in the event that the pneumatic line to any one of the wheels 12a, 12b, 12c, 12d is severed or otherwise damaged, fluid will be exhausted from the spring brake chamber, and hence the parking brake applied in a sudden and uncontrolled manner.

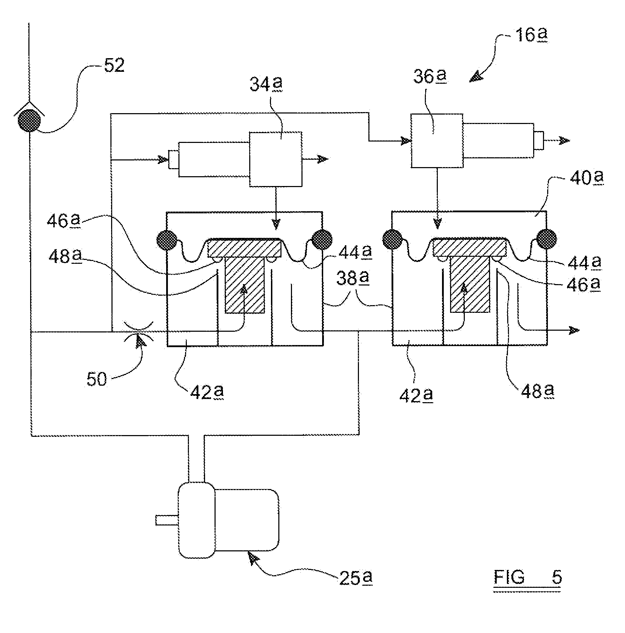

To prevent sudden and uncontrolled brake application in the event of electrical power failure or severing of the pneumatic line to the modulator 16a, 16b, 16c, 16d, in an embodiment of braking system according to the invention, a non-return valve 52 is provided in each pneumatic line at the wheel and between the central control unit 22, 22' and both of the spring brake chamber and the modulator 16 as illustrated in Figure 5. This non-return valve 52 prevents the spring brake chamber from venting to atmosphere, at the central control unit 22, 22' in the event of power failure, or at a point of damage in the pneumatic line to the modulator 16a, 16b, 16c, 16d.

It will be appreciated, however, that the provision of such a non-return valve will also prevent the venting of the spring chamber at the central control unit 22, 22', during normal operation, and, in this system, it would be necessary programme each modulator 16a, 16b, 16c, 16d to supply power to the wheel build valve 30a, 30b, 30c, 30d when instructed to apply the parking brake, so that fluid from the spring chamber can vent to atmosphere via the second valve assembly 32 at the modulator 16. The modulators 16a, 26b, 16c, 16d in the embodiment of the invention without the non-return valve may advantageously be programmed in the same way, as local venting of the spring brake chamber at the vehicle wheel 12a, 12b, 12c, 12d may be desirable to achieve quick application of the park brake. In prior art systems this was achieved using a separate quick release valve, but virtue of the arrangement described herein, this may be achieved without the need to provide an additional quick release valve.

By providing the non-return valve, in the event of electrical power failure in one of the circuits whilst the vehicle is in motion, although sudden, uncontrolled application of the spring brake is avoided, it will be appreciated that the wheel build and wheel dump valves 30a, 30b, 30c, 30d, 32a, 32b, 32c, 32d in the failed circuit are arranged such that the service brake chamber is exhausted to atmosphere. Thus, no braking whatsoever will be possible.

By virtue of the provision of two entirely separate electrical control circuits, however, operation of the brakes on two out of the four vehicle wheels 12a 12b, 12c, 12d can continue in the event of a failure of one of the two electrical control circuits. Thus, redundancy is provided in the system, without the need for a back-up pneumatic connection between the brake pedal 14a and the modulator 16a, 16b, 16c, 16d.

By arranging each circuit to control diagonally opposite wheels 12a, 12b, 12c, 12d, in such an event, the driver is given the best possible chance of braking the vehicle is a controlled manner. It will be appreciated, however, that the system could be arranged differently in this regard, with one circuit controlling the front wheels 12a, 12b, and the other controlling the rear wheels 12c, 12d, for example.

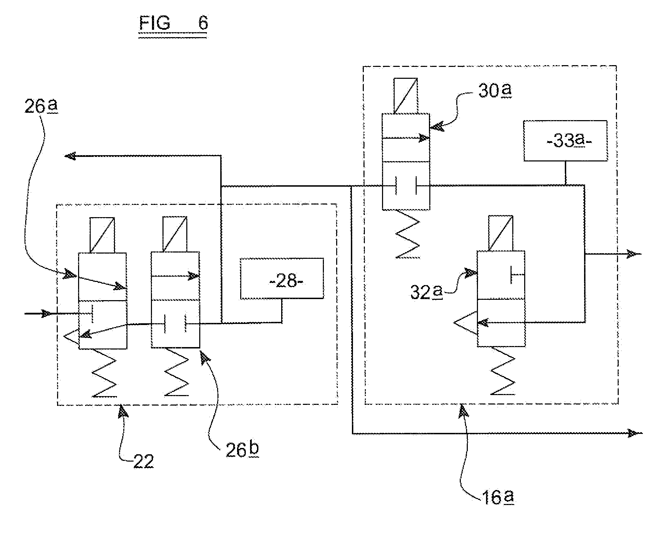

Uncontrolled application of the spring brake in the event of electrical power failure can be avoided without the use of such a non-return valve by configuring the central control units 22, 22' as illustrated in Figure 6. In this embodiment, the park build valve 26a has a first port which communicates with the first reservoir, a second port which communicates with the park dump valve 26b, and a third port which communicates with the atmosphere, and is mechanically biased to a closed position in which the second port is connected to the third port, whilst the first port is closed, and movable, by the application of an electrical current to its solenoid, to an open position in which the first port is connected to the second port and the third port is closed. The park dump valve 26b has a first port which communicates with the second port of the park build valve 26a and a second port which communicates with the pneumatic line to the modulators 16a, 16d and the spring brake chambers of the first and fourth brake actuators 25a, 25d. A pressure transducer 28 is connected to the second port, and the second valve 26b is mechanically biased to a closed position in which both the first and second ports are closed, and is movable to an open position by the supply of an electrical current to its solenoid, to an open position in which the first and second ports are connected.

This braking system is operated in much the same way is the embodiment illustrated in Figure 2, except that, in order to apply the park brake, it is necessary to maintain the current supply to the park dump valve 26b, 26b' whilst the spring brake chamber is evacuated, and remove current to this valve after this is done. It will be appreciated that, by virtue of this arrangement, in the event of electrical power failure fluid pressure in the spring brake chamber will be held by the park dump valve 26b, 26b', and there will be no sudden application of the spring brake. This does not assist where there is a sudden loss of pressure due to the pneumatic line to a modulator 16a, 16b, 16c, 16d being severed, and this can be dealt with by including a non-return valve in this system in the same place as in Figure 5.

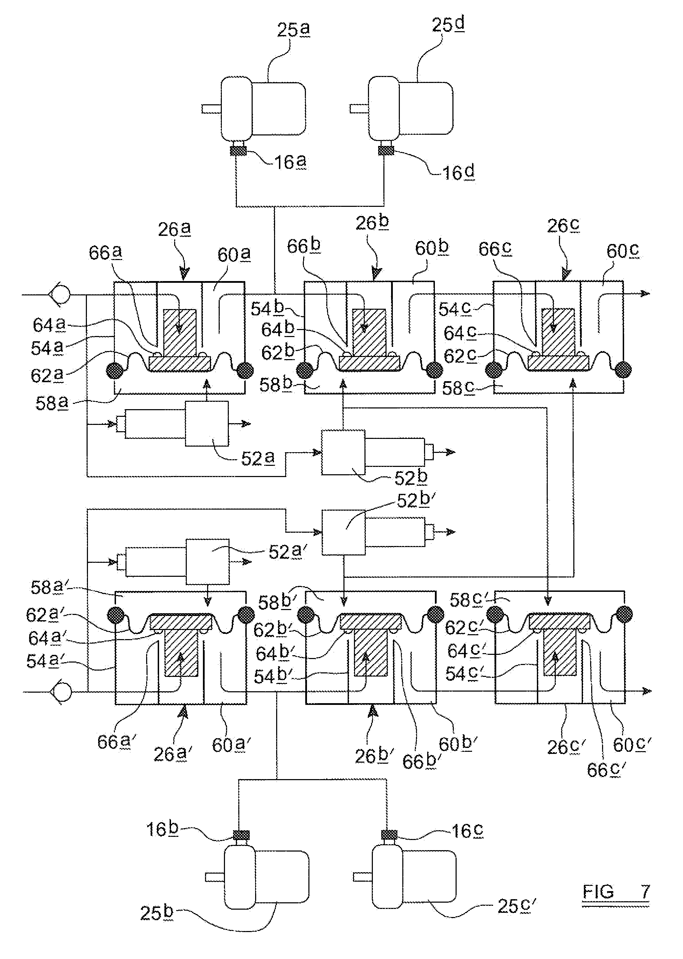

A further alternative embodiment of central control unit 22, 22' is illustrated in Figure 7. In this version, whilst the control units 22, 22' are still electrically separate, there is a pneumatic cross-link between the two control units 22, 22'.

In Figure 7 it can be seen that the wheel build valves 30a, 30d and the wheel dump valves 30a, 30d are configured and arranged in exactly the same way is in the embodiment illustrated in Figure 4, but each central control unit 22, 22' is provided with a third valve assembly 26c, 26c', hereinafter referred to as the control exhaust valve 26c, 26c', a first port of the control exhaust valve 26c, 26c' being connected to the second port of the park dump valve 26b, 26b'.

The control exhaust valve 26c, 26c' also has a body 54c, 54c' which is divided into a control chamber 58c, 58c' and a flow chamber 60c, 60c' by means of a diaphragm 62c, 62c' on which is mounted a valve member 64c, 64c'. The first and second ports of the valve 26c, 26c' communicate with the flow chamber 60c, 60c'. The diaphragm 62c, 62c' is movable so that the valve member 64c, 64c' may engage with a valve seat 66c, 66c' and prevents flow of fluid from the first port to the second port of the valve 26c, 26c'. The second port of the exhaust control valve 26c, 26c' vents to the atmosphere.

The control chamber 58c, 58c' of each control exhaust valve 26c, 26c' is connected to the control chamber 58b', 58b of the park hold valve 26b', 26b in the other central control unit 22, 22'. Thus, whilst the electrical control of each central control unit 22, 22' is entirely separate, there is a pneumatic connection between the two central control units 22, 22'.

The central control units 22, 22' thus operate as follows.

If electrical power is supplied to the solenoids 52a, 52a', 52b, 52b', the control chamber 58a, 58a' of the park build/dump valve 26a, 26a' vents to atmosphere, whilst the control chamber 58b, 58b' of the park hold valve 26b, 26b' is connected to the inlet pressure from the reservoir 20, 20'.

Consequently, flow of fluid from through the flow chamber 60a, 60a' of the park build/dump valve 26a, 26a' is permitted whilst flow of fluid through the flow chamber 60b, 60b' is prevented and flow of fluid from the reservoir 20, 20' to the spring brake chambers via modulators 16a, 16b, 16c, 16c occurs. Fluid pressure from the control chamber 58b, 58b' in the park hold valve 26b, 26b' in one control unit 22, 22' feed the control chamber 58c', 58c in the other control unit 22', 22, and thus flow fluid through the flow chamber 60c, 60c' of the control exhaust valve 26c, 26c' is also prevented.

If, as in the event of sudden electrical failure in the first circuit, electrical current is no longer supplied to the solenoids 52a, 52b, the control chamber 58a of the park build/dump valve 26a, is connected to the pressure supplied by the reservoir 20, and flow of fluid through the flow chamber 60a of the park build/dump valve 26a is prevented, whilst the control chamber 58b of the park hold valve 26b, and consequently, the control chamber of the control exhaust valve 26c' in the other control unit 22', are connected to the atmosphere. Consequently, flow of fluid from through the flow chamber 60a of the park build/dump valve 26a is prevented whilst flow of fluid through the flow chamber 60b, 60b' is permitted. In the absence of the control exhaust valve 26c this would cause the spring brake chamber to vent to the atmosphere, and hence the spring brake to be applied, but, the control chamber 58c of the control unit 22 without electrical power is connected to the control chamber 58b of the other park hold valve 26b'.

As the application of the spring brake was not intended, and hence no park brake demand signal received by either control unit 22, 22', the control chamber 58b' of the powered control unit 22' is pressurised with fluid from the reservoir. As a result, the valve member 64c engages with the valve seat 66c to prevent flow of fluid through the flow chamber 60c. This prevents the spring chamber from venting to the atmosphere, and the spring brake being applied in an uncontrolled manner.

If the driver then activates the parking brake switch 24 to apply the parking brake, the control chambers 58b, 58b', 58c, 58c' in the park dump valve 26c, 26b' and the control exhaust valve 26c, 26c' are vented to atmosphere. As a result, the spring brake chamber is evacuated on all wheels. This embodiment has an advantage over the embodiment illustrated in Figure 6 that, in the event of power failure in one of the circuits, whilst uncontrolled application of the spring brake is avoided, the spring brake can be applied on all wheels 12a, 12b, 12c, 12d if the driver requires it, for example, for parking the vehicle after bringing it to a stop in a controlled manner using the remaining service braking capability. This would not be possible to achieve if a non-return valve were included, and therefore in this embodiment of the invention, there will be sudden application of the spring brake in the event of damage to the pneumatic line to a modulator 16a, 16b, 16c, 16d.

It should be noted that, whilst the embodiments of the invention described above have specified that the systems are pneumatically operated and pressurised fluid is compressed air, it will be appreciated that any other pneumatic or hydraulic fluid may be used instead. It should also be noted that a piston may be employed in any of the valve assemblies described above in place of a diaphragm.

In all embodiments of the invention described above, the braking system may be provided with the capability of carrying out dynamic braking control functions such as stability control, anti-roll functions etc. The central control units 22, 22' may be programmed to provide such control functions, and modify the braking demand signals transmitted to the modulators 16a, 16b, 16c, 16d in accordance with these control functions whenever required. If this is the case, by virtue of the electrical separation of the two central control units 22, 22' complete redundancy of these functions is provided, as if one control unit 22, 22' fails, the other will still function and provide these control functions. As the provision of these functions is not critical to the safe operation of the vehicle, at least not compared to the ability to operate vehicle brakes, such redundancy may not be considered to be necessary, and there may be a single processor which provides these functions, and modifies the braking demand signals transmitted by both central control units 22, 22' to the modulators 16a, 16b, 16c 16d as or when required. If the single processor fails, this modification will cease, but transmission of the braking demand signals to the modulators 16a, 16b, 16c, 16d, and hence the ability to operate the brakes, will be maintained.

When used in this specification and claims, the terms "comprises" and "comprising" and variations thereof mean that the specified features, steps or integers are included. The terms are not to be interpreted to exclude the presence of other features, steps or components.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A braking system (10) comprising a first braking demand signal generator (14b, 14b'), a modulator (16a, 16b, 16c, 16d) which is connected to a source of pressurised fluid (20, 20') via a first fluid flow line, the modulator (16a, 16b, 16c, 16d) being connected to and having an input for receipt of a braking demand signal from the braking demand signal generator (14b, 14b') and further connected to a first braking chamber in a fluid operated brake actuator (25a, 25b, 25c, 25d) via a second fluid flow line, the modulator (16a, 16b, 16c, 16d) being adapted, on receipt of a braking demand signal from the first braking demand signal generator (14b, 14b'), to allow pressurised fluid to pass from the source of pressurised fluid (20, 20') to the actuator (25a, 25b, 25c, 25d), the actuator (25a, 25b, 25c, 25d) being configured such that passage of pressurised fluid from the modulator (16a, 16b, 16c, 16d) into the first chamber causes the actuator (25a, 25b, 25c, 25d) to move to a brake apply position, the system further comprising a second braking demand signal generator (24) which is connected to an electrically operated controller (22, 22'), the controller (22, 22') having an input for receipt of a braking demand signal from the second braking demand signal generator (24), and controlling flow of fluid from the source of pressurised fluid (20,20') to a second chamber of the brake actuator (25a, 25b, 25c, 25d), the brake actuator (25a, 25b, 25c, 25d) being further provided with a mechanical biasing element which biases the actuator (25a, 25b, 25c, 25d) into the brake apply position, and being configured such the passage of pressurised fluid into the second chamber causes the actuator (25a, 25b, 25c, 25d) to be moved against the force of the mechanical biasing element out of the brake apply position, **characterized by** the controller (22, 22') being adapted to release pressurised fluid from the second chamber of the actuator (25a, 25b, 25c, 25d) on receipt of a braking demand signal, but not in the event of failure of the electrical power supply to the controller (22, 22').

2. A braking system (10) according to claim 1 wherein the controller (22, 22') includes first (26a, 26a') and second (26b, 26b') electrically operable valve assemblies, the first valve assembly (26a, 26a') having an inlet which is connected to the source of pressurised fluid (20, 20'), and an outlet which is connected to an inlet of the second valve assembly (26b, 26b'), and the second valve assembly (26b, 26b') including an outlet which is connected to the second chamber.

3. A braking system (10) according to claim 2 wherein the first valve assembly (26a, 26a') is configured so as to adopt a configuration in which flow of fluid between its inlet and the outlet is substantially prevented, when there is no supply of electricity to the first valve assembly (26a, 26a'), and the second valve assembly (26b, 26b') is configured so as to adopt a configuration in which flow of fluid between its inlet and outlet is also substantially prevented when there is no supply of electricity to the second valve assembly (26b, 26b').

4. A braking system (10) according to claim 3 wherein the first valve assembly (26a, 26a') has a third port which is vented to atmosphere, and is configured so that the third port is connected to the outlet when there is no supply of electricity to the first valve assembly (26a, 26a').

5. A braking system (10) according to claim 1 wherein the system further comprises a third braking demand signal generator (14b, 14b') which is connected to a second brake actuator (25a, 25b, 25c, 25d) via a second electrically operated controller (22, 22'), the second controller (22, 22') having an input for receipt of a braking demand signal from the third braking demand signal generator (14b, 14b'), the second brake actuator (25a, 25b, 25c, 25d) including a second chamber and a mechanical biasing element which biases the actuator (25a, 25b, 25c, 25d) into a brake apply position, and being configured such the passage of pressurised fluid into the second chamber causes the second actuator (25a, 25b, 25c, 25d) to be moved against the force of the mechanical biasing element out of the brake apply position, the second controller (22, 22') being adapted to release pressurised fluid from the second chamber of the actuator (25a, 25b, 25c, 25d) on receipt of a braking demand signal from the third braking demand signal generator (14b, 14b'), wherein the first controller (22, 22') is connected to the second controller (22, 22') such that fluid communication between the controllers (22, 22') is permitted, one controller (22, 22') supplying fluid to the other controller (22, 22') required to maintain the other controller (22, 22') in a configuration in which release of fluid from the second chamber of the respective actuator (25a, 25b, 25c, 25d) is not permitted, when electrical power to the other controller fails.

6. A braking system (10) according to claim 5 wherein each controller (22, 22') includes first (26a, 26a'), second (26b, 26b') and third (26c, 26c') valve assemblies, the first valve assembly (26a, 26a') having an inlet which is connected to a source of pressurised fluid (20, 20'), and an outlet which is connected to an inlet of the second valve assembly (26b, 26b') and to the second chamber, the second valve assembly (26b, 26b') having an outlet which is connected to an inlet of the third valve assembly (26c, 26c').

7. A braking system (10) according to claim 6 wherein the third valve assembly (26c, 26c') has an outlet which is connected to the second valve assembly (26b, 26b') of the other controller (22, 22').

8. A braking system (10) according to any one of claims 4 to 7 wherein the system is provided with two separate sources of pressurised fluid (20, 20'), the first supplying pressurised fluid (20) to the first controller (22), and the second (20') supplying pressurised fluid to the second controller (22').

## Patentansprüche

1. Bremssystem (10) umfassend einen ersten Bremsanforderungssignalgenerator (14b, 14b'), einen Modulator (16a, 16b, 16c, 16d), welcher mit einer Quelle von Druckfluid (20, 20') über eine erste Fluidflussleitung verbunden ist, wobei der Modulator (16a, 16b, 16c, 16d) eine Verbindung zum und einen Eingang für den Empfang eines Bremsanforderungssignals vom Bremsanforderungssignalgenerator (14b, 14b') aufweist und ferner mit einer ersten Bremskammer in einem fluidbetätigten Bremsenaktor (25a, 25b, 25c, 25d) über eine zweite Fluidflussleitung verbunden ist, wobei der Modulator (16a, 16b, 16c, 16d) dafür ausgelegt ist, bei Empfang eines Bremsanforderungssignals vom ersten Bremsanforderungssignalgenerator (14b, 14b') Druckfluid von der Quelle von Druckfluid (20, 20') zum Aktor (25a, 25b, 25c, 25d) durchzulassen, wobei der Aktor (25a, 25b, 25c, 25d) so konfiguriert ist, dass Durchgang von Druckfluid vom Modulator (16a, 16b, 16c, 16d) in die erste Kammer bewirkt, dass sich der Aktor (25a, 25b, 25c, 25d) in eine Bremsenbetätigungsposition bewegt, wobei das System ferner einen zweiten Bremsanforderungssignalgenerator (24) umfasst, welcher mit einem elektrisch betätigten Steuergerät (22, 22') verbunden ist, wobei das Steuergerät (22, 22') einen Eingang für den Empfang eines Bremsanforderungssignals vom zweiten Bremsanforderungssignalgenerator (24) aufweist und den Fluss von Fluid von der Quelle von Druckfluid (20, 20') in eine zweite Kammer des Bremsenaktors (25a, 25b, 25c, 25d) steuert, wobei der Bremsenaktor (25a, 25b, 25c, 25d) ferner mit einem mechanischen Vorspannungselement versehen ist, welches den Aktor (25a, 25b, 25c, 25d) in der Bremsenbetätigungsposition vorspannt, und so konfiguriert ist, dass der Durchgang von Druckfluid in die zweite Kammer bewirkt, dass der Aktor (25a, 25b, 25c, 25d) gegen die Kraft des mechanischen Vorspannungselements aus der Bremsenbetätigungsposition bewegt wird, **dadurch gekennzeichnet, dass** das Steuergerät (22, 22') dafür ausgelegt ist, Druckfluid aus der zweiten Kammer des Aktors (25a, 25b, 25c, 25d) bei Empfang eines Bremsanforderungssignals abzugeben, aber nicht bei Ausfall der elektrischen Stromversorgung des Steuergeräts (22, 22').

2. Bremssystem (10) nach Anspruch 1, worin das Steuergerät (22, 22') erste (26a, 26a') und zweite (26b, 26b') elektrisch betätigbare Ventilbaugruppen beinhaltet, wobei die erste Ventilbaugruppe (26a, 26a') einen Einlass aufweist, welcher mit der Quelle von Druckfluid (20, 20') verbunden ist, und einen Auslass, welcher mit einem Einlass der zweiten Ventilbaugruppe (26b, 26b') verbunden ist, und die zweite Ventilbaugruppe (26b, 26b') einen Auslass beinhaltet, welcher mit der zweiten Kammer verbunden ist.

3. Bremssystem (10) nach Anspruch 2, worin die erste Ventilbaugruppe (26a, 26a') dafür konfiguriert ist, eine Konfiguration zu übernehmen, in welcher der Fluss von Fluid zwischen ihrem Einlass und dem Auslass im Wesentlichen verhindert wird, wenn keine elektrische Stromversorgung der ersten Ventilbaugruppe (26a, 26a') vorliegt, und die zweite Ventilbaugruppe (26b, 26b') dafür konfiguriert ist, eine Konfiguration zu übernehmen, in welcher der Fluss von Fluid zwischen ihrem Einlass und Auslass ebenfalls im Wesentlichen verhindert wird, wenn keine elektrische Stromversorgung der zweiten Ventilbaugruppe (26b, 26b') vorliegt.

4. Bremssystem (10) nach Anspruch 3, worin die erste Ventilbaugruppe (26a, 26a') eine dritte Öffnung aufweist, welche zur Atmosphäre entlüftet ist, und so konfiguriert ist, dass die dritte Öffnung mit dem Auslass verbunden ist, wenn keine elektrische Stromversorgung der ersten Ventilbaugruppe (26a, 26a') vorliegt.

5. Bremssystem (10) nach Anspruch 1, worin das System ferner einen dritten Bremsanforderungssignalgenerator (14b, 14b') umfasst, welcher mit einem zweiten Bremsenaktor (25a, 25b, 25c, 25d) über ein zweites elektrisch betätigtes Steuergerät (22, 22') verbunden ist, wobei das zweite Steuergerät (22, 22') einen Eingang für den Empfang eines Bremsanforderungssignals vom dritten Bremsanforderungssignalgenerator (14b, 14b') aufweist, wobei der zweite Bremsenaktor (25a, 25b, 25c, 25d) eine zweite Kammer und ein mechanisches Vorspannungselement beinhaltet, welches den Aktor (25a, 25b, 25c, 25d) in einer Bremsenbetätigungsposition vorspannt, und so konfiguriert ist, dass der Durchgang von Druckfluid in die zweite Kammer bewirkt, dass der zweite Aktor (25a, 25b, 25c, 25d) gegen die Kraft des mechanischen Vorspannungselements aus der Bremsenbetätigungsposition bewegt wird, wobei das zweite Steuergerät (22, 22') dafür ausgelegt ist, Druckfluid aus der zweiten Kammer des Aktors (25a, 25b, 25c, 25d) bei Empfang eines Bremsanforderungssignals vom dritten Bremsanforderungssignalgenerator (14b, 14b') abzugeben, worin das erste Steuergerät (22, 22') mit dem zweiten Steuergerät (22, 22') verbunden ist, sodass Fluidverbindung zwischen den Steuergeräten (22, 22') erlaubt ist, wobei ein Steuergerät (22, 22') Fluid an das andere Steuergerät (22, 22') liefert, das erforderlich ist, um das andere Steuergerät (22, 22') in einer Konfiguration zu halten, in welcher die Abgabe von Fluid aus der zweiten Kammer des jeweiligen Aktors (25a, 25b, 25c, 25d) nicht erlaubt ist, wenn die Stromversorgung des anderen Steuergeräts ausfällt.

6. Bremssystem (10) nach Anspruch 5, worin jedes Steuergerät (22, 22') erste (26a, 26a'), zweite (26b, 26b') und dritte (26c, 26c') Ventilbaugruppen beinhaltet, wobei die erste Ventilbaugruppe (26a, 26a') einen Einlass aufweist, welcher mit einer Quelle von Druckfluid (20, 20') verbunden ist, und einen Auslass, welcher mit einem Einlass der zweiten Ventilbaugruppe (26b, 26b') und mit der zweiten Kammer verbunden ist, wobei die zweite Ventilbaugruppe (26b, 26b') einen Auslass aufweist, welcher mit einem Einlass der dritten Ventilbaugruppe (26c, 26c') verbunden ist.

7. Bremssystem (10) nach Anspruch 6, worin die dritte Ventilbaugruppe (26c, 26c') einen Auslass aufweist, welcher mit der zweiten Ventilbaugruppe (26b, 26b') des anderen Steuergeräts (22, 22') verbunden ist.

8. Bremssystem (10) nach einem beliebigen der Ansprüche 4 bis 7, worin das System mit zwei separaten Quellen von Druckfluid (20, 20') versehen ist, wobei die erste Druckfluid (20) an das erste Steuergerät (22) liefert und die zweite (20') Druckfluid an das zweite Steuergerät (22') liefert.

## Revendications

1. Système de freinage (10) comprenant un premier générateur de signal de demande de freinage (14b, 14b'), un modulateur (16a, 16b, 16c, 16d) connecté à une source de fluide pressurisé (20, 20') via une première conduite d'écoulement de fluide, le modulateur (16a, 16b, 16c, 16d) étant connecté à une entrée qu'il comporte et qui sert à recevoir un signal de demande de freinage provenant du générateur de signal de demande de freinage (14b, 14b'), et étant en outre connecté à une première chambre de freinage dans un actionneur de frein actionné par fluide (25a, 25b, 25c, 25d) via une seconde conduite d'écoulement, le modulateur (16a, 16b, 16c, 16d) étant conçu, à la réception d'un signal de demande de freinage provenant du premier générateur de signal de demande de freinage (14b, 14b'), pour laisser passer le fluide pressurisé de la source de fluide pressurisé (20, 20') à l'actionneur (25a, 25b, 25c, 25d), l'actionneur (25a, 25b, 25c, 25d) étant conçu de telle sorte que le passage de fluide pressurisé provenant du modulateur (16a, 16b, 16c, 16d) dans la première chambre provoque le déplacement de l'actionneur (25a, 25b, 25c, 25d) dans une position de serrage de frein, le système comprenant en outre un deuxième générateur de signal de demande de freinage (24) connecté à un contrôleur actionné électriquement (22, 22'), le contrôleur (22, 22') comportant une entrée servant à recevoir un signal de demande de freinage provenant du deuxième générateur de signal de demande de freinage (24), et contrôlant l'écoulement de fluide de la source de fluide pressurisé (20,20') à une seconde chambre de l'actionneur de frein (25a, 25b, 25c, 25d), l'actionneur de frein (25a, 25b, 25c, 25d) comportant en outre un élément de sollicitation mécanique qui sollicite l'actionneur (25a, 25b, 25c, 25d) dans la position de serrage de frein, et étant configuré de telle sorte que le passage de fluide pressurisé dans la seconde chambre provoque le déplacement de l'actionneur (25a, 25b, 25c, 25d) contre la force de l'élément de sollicitation mécanique hors de la position de serrage de frein ;
**caractérisé en ce que** le contrôleur (22, 22') est conçu pour libérer le fluide pressurisé de la seconde chambre de l'actionneur (25a, 25b, 25c, 25d) à la réception d'un signal de demande de freinage, mais pas en cas de panne de l'alimentation électrique du contrôleur (22, 22').

2. Système de freinage (10) selon la revendication 1, dans lequel le contrôleur (22, 22') comprend des premier (26a, 26a') et second (26b, 26b') ensembles vanne actionnés électriquement, le premier ensemble vanne (26a, 26a') comportant une entrée connectée à la source de fluide pressurisé (20, 20'), et une sortie connectée à une entrée du deuxième ensemble vanne (26b, 26b'), et le deuxième ensemble vanne (26b, 26b') comportant une sortie connectée à la seconde chambre.

3. Système de freinage (10) selon la revendication 2, dans lequel le premier ensemble vanne (26a, 26a') est conçu de manière à adopter une configuration dans laquelle l'écoulement de fluide entre son entrée et sa sortie est pratiquement empêché quand le premier ensemble vanne (26a, 26a') n'est pas alimenté électriquement, et dans lequel le deuxième ensemble vanne (26b, 26b') est conçu de manière à adopter une configuration dans laquelle l'écoulement de fluide entre son entrée et sa sortie est également pratiquement empêché quand le deuxième ensemble vanne (26b, 26b') n'est pas alimenté électriquement.

4. Système de freinage (10) selon la revendication 3, dans lequel le premier ensemble vanne (26a, 26a') comprend un troisième orifice qui est mis à l'atmosphère, et est conçu de telle sorte que le troisième orifice soit connecté à la sortie quand le premier ensemble vanne (26a, 26a') n'est pas alimenté électriquement.

5. Système de freinage (10) selon la revendication 1, dans lequel le système comprend un troisième générateur de signal de demande de freinage (14b, 14b') connecté à un second actionneur de frein (25a, 25b, 25c, 25d) via un second contrôleur actionné électriquement (22, 22'), le second contrôleur (22, 22') comportant une entrée servant à recevoir un signal de demande de freinage provenant du troisième générateur de signal de demande de freinage (14b, 14b'), le second actionneur de frein (25a, 25b, 25c, 25d) comportant une seconde chambre et un élément de sollicitation mécanique qui sollicite l'actionneur (25a, 25b, 25c, 25d) dans une position de serrage de frein, et étant conçu de telle sorte que le passage de fluide pressurisé dans la seconde chambre provoque le déplacement du second actionneur (25a, 25b, 25c, 25d) contre la force de l'élément de sollicitation mécanique hors de la position de serrage de frein, le second contrôleur (22, 22') étant conçu pour libérer le fluide pressurisé de la seconde chambre de l'actionneur (25a, 25b, 25c, 25d) à la réception d'un signal de demande de freinage provenant du troisième générateur de signal de demande de freinage (14b, 14b'), le premier contrôleur (22, 22') étant connecté au second contrôleur (22, 22') de façon à permettre la communication de fluide entre les contrôleurs (22, 22'), un contrôleur (22, 22') fournissant le fluide à l'autre contrôleur (22, 22') étant requis pour maintenir l'autre contrôleur (22, 22') dans une configuration dans laquelle la libération de fluide de la seconde chambre de l'actionneur respectif (25a, 25b, 25c, 25d) n'est pas permise, en cas de panne de l'alimentation électrique de l'autre contrôleur.

6. Système de freinage (10) selon la revendication 5, dans lequel chaque contrôleur (22, 22') comprend des premier (26a, 26a'), des deuxième (26b, 26b') et des troisième (26c, 26c') ensembles vanne, le premier ensemble vanne (26a, 26a') comportant une entrée connectée à une source de fluide pressurisé (20, 20'), et une sortie connectée à une entrée du deuxième ensemble vanne (26b, 26b') et à la seconde chambre, et le deuxième ensemble vanne (26b, 26b') comportant une sortie connectée à une entrée du troisième ensemble vanne (26c, 26c').

7. Système de freinage (10) selon la revendication 6, dans lequel le troisième ensemble vanne (26c, 26c') comprend une sortie connectée au deuxième ensemble vanne (26b, 26b') de l'autre contrôleur (22, 22').

8. Système de freinage (10) selon l'une quelconque des revendications 4 à 7, le système comportant deux sources séparées de fluide pressurisé (20, 20'), la première fournissant du fluide pressurisé (20) au premier contrôleur (22), et la seconde (20') fournissant du fluide pressurisé au second contrôleur (22').
